# EUROPÄISCHE PATENTANMELDUNG

(11) **EP 0 938 234 A2**
(43) Veröffentlichungstag der Anmeldung: **25.08.1999**
(21) Anmeldenummer: 99440015.8
(22) Anmeldetag: 29.01.1999
(51) Int. Cl.: H04N 7/173

(54) **Datenbereitstellungsystem**

(30) Priorität: 20.02.1998 DE 19807076
(71) Anmelder: ALCATEL, 75008 Paris (FR)
(72) Erfinder: Lutterschmidt, Karl-Heinz, 1030 Wien (AT)
(74) Vertreter: Zinsinger, Norbert

(57) **Zusammenfassung**

Die Erfindung betrifft ein Verfahren zur Belieferung von Client-Knoten mit Datenströmen, ein Verfahren zur Unterstützung der Belieferung von Client-Knoten mit Datenströmen, ein Datenbereitstellungsystem und einen Zentral-Server-Knoten. Um eine Vielzahl von Client-Knoten (C1 bis C4) mit Datenströmen verschiedenen Inhalts zu beliefern, werden Datensätze mit den verschiedenen Inhalten in zwei oder mehr Daten-Server-Knoten (SS1 bis SS4) gespeichert, die über ein erstes Kommunikationsnetz (KN2) mit der Vielzahl von Client-Knoten (C1 bis C4) verbindbar sind. Diese Daten-Server-Knoten (SS1 bis SS4) werden weiter von einem Zentral-Server-Knoten (AS) laufend überwacht, der hierbei Zustandsdaten über die Auslastung und den Inhalt von in den Daten-Server-Knoten (SS1 bis SS4) gespeicherten Datensätzen empfängt. Zur Anforderung eines Datenstroms mit einem bestimmten Inhalt sendet ein Client-Knoten (C1) eine Anforderungsnachricht an den Zentral-Server-Knoten (AS). Der Zentral-Server-Knoten (AS) ordnet dem anfordernden Client-Knoten (C1) mittels Auswertung der Zustandsdaten dynamisch einen der Daten-Server-Knoten (SS1) zu, in dem ein Datensatz mit dem bestimmten Inhalt abgespeichert ist. Der zugeordnete Daten-Server-Knoten (SS1) sendet den angeforderten Datenstrom sodann an den anfordernden Client-Knoten (C1).

## Beschreibung

Die Erfindung betrifft ein Verfahren zur Belieferung von Client-Knoten mit Datenströmen nach dem Oberbegriff von Anspruch 1, ein Verfahren zur Unterstützung der Belieferung von Client-Knoten mit Datenströmen nach dem Oberbegriff von Anspruch 9, ein Datenbereitstellungsystem nach dem Oberbegriff von Anspruch 10 und einen Zentral-Server-Knoten nach dem Oberbegriff von Anspruch 11.

Die Erfindung geht von einem Video-on-Demand System aus, wie es beispielsweise in EP 0696872 A2 beschrieben ist.

Ein solches Video-on-Demand System besteht aus einen Video-Server-Knoten, der über ein Kommunikationsnetz mit einer Vielzahl von Client-Knoten verbunden ist. Ein Client-Knoten wird von einer Set-Top-Box gebildet, die mit einem Fernsehgerät verbunden ist. Der Video-Server-Knoten verfügt über einen Speicher, in dem Video-Datensätze verschiedenen Inhalts, beispielsweise verschiedene Filme, abgespeichert sind. Weiter verfügt der Video-Server-Knoten über mehrere Video-Wiedergabeeinrichtungen, die diese Video-Datensätze wiedergeben und den so erzeugten Strom von Video-Daten an einen anfordernden Client senden. Der Video-Server-Knoten verfügt weiter über eine Steuereinheit, die einem anfordernden Client-Knoten eine Video-Wiedergabeeinrichtungen zuordnet und das Senden des Video-Datenstroms von der zugeordneten Video-Wiedergabeeinrichtung an den Client-Knoten veranlaßt. Die Zuordnung erfolgt hierbei unter der Zielsetzung, einen Video-Datenstrom parallel an möglichst viele Client-Knoten zu senden.

Fordert ein Client-Knoten nun die Wiedergabe eines Video-Datensatzes mit einem bestimmten Inhalt, beispielsweise die Wiedergabe eines bestimmten Videofilmes, an, so ist es möglich, daß dem Video-Server-Knoten die Zuordnung einer Wiedergabeeinrichtung nicht gelingt. Dies kann sich ereignen, wenn beispielsweise keine ausreichenden Ressourcen im Video-Server-Knoten mehr zur Verfügung stehen. Es ist weiter möglich, daß der angeforderte Video-Film gar nicht in dem Speicher des Video-Server-Knotens abgespeichert ist und daß aus diesem Grund der Video-Server-Knoten den angeforderten Video-Film nicht bereitstellen kann. Es ist weiter möglich, daß die gesamte Anschlußkapazität des Video-Server-Knotens bereits von anderen Client-Knoten belegt ist und aus diesem Grund kein weiterer Zugriff auf den Video-Server-Knoten mehr möglich ist.

Der Erfindung liegt nun die Aufgabe zugrunde, die Versorgung von Client-Knoten mit Datenströmen verschiedenen Inhalts zu verbessern.

Diese Aufgabe wird gelöst durch ein Verfahren zur Belieferung von Client-Knoten mit Datenströmen nach der Lehre von Anspruch 1, ein Verfahren zur Unterstützung der Belieferung von Client-Knoten mit Datenströmen nach der Lehre von Anspruch 9, ein Datenbereitstellungsystem nach der Lehre von Anspruch 10 und einen Zentral-Server-Knoten nach der Lehre von Anspruch 11.

Der Erfindung liegt hierbei der Gedanke zugrunde, daß sich die Client-Knoten einen Satz von mehreren Daten-Server-Knoten teilen, die mit den Client-Knoten über ein Kommunikationsnetz verbindbar sind. Ein Zentral-Server-Knoten überwacht diese Daten-Server-Knoten und führt mittels der so gewonnenen Daten eine dynamische Zuordnung von Client-Knoten zu Daten-Server-Knoten durch.

Die Datensätzen, die von einem Daten-Server-Knoten wiedergegeben und als Datenstrom an einen Client-Knoten gesendet werden, enthalten hierbei ganz allgemein "stream" Daten wie Video-, Sprach- oder Multimedia-Daten, also Daten, die mit gleichbleibender Übertragungsrate in Echtzeit an den Client-Knoten gesendet werden.

Der Vorteil der Erfindung besteht darin, daß ein Client-Knoten hierdurch transparent Zugang zu den Inhalten und Ressourcen mehrerer Daten-Server-Knoten erhält. Ein Client-Knoten kann damit transparent auf eine größere Zahl von Inhalten mit einer geringeren Ablehnungswahrscheinlichkeit zugreifen. Durch die räumlich verteilte Struktur der Daten-Server-Knoten wird weiter eine gleichmäßigere Auslastung des Kommunikationsnetzes bewirkt, das die Daten von den Daten-Server-Knoten an die Client-Knoten überträgt. Gegenüber der Möglichkeit eines sehr leistungsfähigen zentralen Daten-Server-Knotens ergeben sich somit bei einer erfindungsgemäße Architektur folgende Vorteile: Die Gefahr einer punktuellen Überlastung des Kommunikationsnetzes wird reduziert. Die Länge der Verbindungswege und somit der belegten Ressourcen des Kommunikationsnetzes wird reduziert. Die Ausfallwahrscheinlichkeit des Datenbereitstellungsystems wird reduziert.

Ein erfindungsgemäßes Datenbereitstellungsystem hat hierbei vor allem Vorteile, wenn eine große Zahl von Client-Knoten auf eine große Zahl verschiedener Inhalte zugreift. Ein solches System läßt sich mit den bisherigen Lösungen nur schwer realisieren.

Vorteilhafte Ausgestaltungen der Erfindung sind den Unteransprüchen zu entnehmen.

Es ist hierbei vor allem vorteilhaft, daß der Zentral-Server-Knoten auch die Verteilung der Inhalte auf die Daten-Server-Knoten zentral verwaltet. Hierdurch ist eine weitere Optimierung des Datenbereitstellungsystems möglich, die Servicequalität des Datenbereitstellungssystems und die von ihm benötigten Ressourcen werden weiter verringert.

Im folgenden wir die Erfindung anhand eines Ausführungsbeispiels unter Zuhilfenahme beiliegender Zeichnungen beispielhaft erläutert.

Fig. 1 zeigt ein Blockschaltbild einer Kommunikationsanordnung mit einem erfindungsgemäßen Datenbereitstellungssystem.

Fig. 2 zeigt eine funktionelle Darstellung eines Teils des erfindungsgemäßen Datenbereitstellungsystems nach Fig. 3.

Fig. 3 zeigt ein Ablaufdiagramm des Nachrichtenaustausches in dem Datenbereitstellungssystem nach Fig. 1.

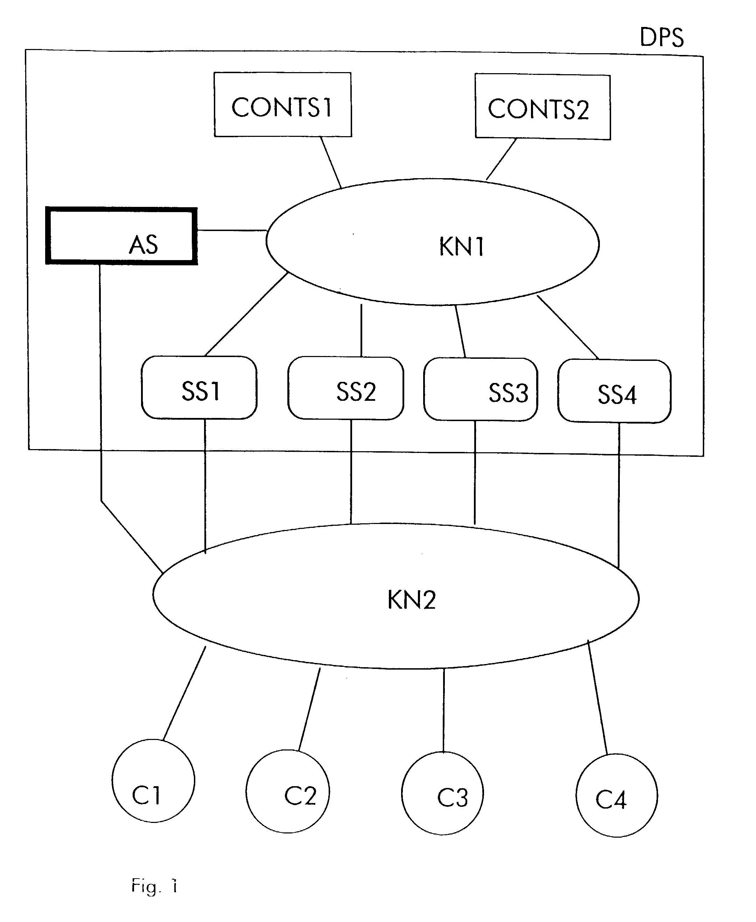

Fig. 1 zeigt ein Datenbereitstellungssystem DPS, vier Client-Knoten C1 bis C4 und ein Kommunikationsnetz KN2, über das die Client-Knoten C1 bis C4 mit dem Datenbereitstellungssystem DPS verbunden sind.

Die Zahl der Client-Knoten C1 bis C4 ist beispielhaft gewählt. Bei den Client-Knoten C1 bis C4 handelt es sich jeweils um ein Vidowiedergabegerät, beispielsweise ein Fernsehgerät, das mit einer Set-Top-Box zum Zugriff auf das Datenbereitstellungssystem DPS ausgestattet ist. Eine solcher Client-Knoten und ein zugehöriges Kommunikationsnetz ist beispielsweise in dem Artikel "Das IVOD-Projekt Berlin: Anschlußtechnologie zur Bereitstellung von Diensten", R. Heidemann, Alcatel Telecom Rundschau, 3. Quartal 1996, Seiten 196 bis 200 beschrieben.

Es ist jedoch auch möglich, daß es sich bei den Client-Knoten C1 bis C4 jeweils um eine Computer-Station handelt, die über periphere Baugruppen zur Kommunikation über das Kommunikationsnetz KN2 und zur Ausgabe von von dem Datenbereitstellungssystem DPS bereitgestellten Inhalten verfügt. Bei den Client-Knoten C1 bis C4 handelt es sich somit beispielsweise um Netzwerk-Computer, Personal Computer oder um Info-Terminals.

Das Kommunikationsnetz KN2 besteht aus einem Zugangsnetz, über das die Client-Knoten C1 bis C4 mittels Hybrid Fiber Coax, mittels Kabel-Modems, mittels ISDN (Integrated Service Digital Network) oder mittels ADSL (Asymmetrical Digital Subscriber Line) angeschlossen sind. Insbesonders wenn eine größere Zahl von Client-Knoten an das Kommunikationsnetz KN2 angeschlossen sind, ist es hierbei vorteilhaft, daß das Kommunikationsnetz KN2 über mehrere Zugangsnetze, u. U. verschiedenartige Zugangsnetze, und ein Backbone-Netz verfügt, das die Zugangsnetze untereinander und mit dem Datenbereistsellungsystem DPS verbindet. Geeignete als Backbone-Netz wäre beispielsweise ein ATM (Asynchronous Transfer Mode) oder ein SDH (Synchrone Digitale Hierarchie) Netz.

Es ist auch möglich, daß die Client-Knoten direkt über eine ATM Schnittstelle mit dem Kommunikationsnetz KN2 verbunden sind. Wenn es sich bei einem Client-Knoten um eine Computer Stationen handelt, ist es weiter vorteilhaft, wenn es sich bei dem Kommunikationsnetz KN2 um ein IP Netz(lP =Internet Protocol), beispielsweise um ein sogenanntes Fast Internet handelt.

Das Datenbereitstellungssystem DPS weist vier Daten-Server-Knoten SS1 bis SS4, einen Zentral-Server-Knoten AS, zwei Inhalts-Server-Knoten CONTS1 und CONTS2 und ein Kommunikationsnetz KN1 auf. Die Daten-Server-Knoten SS1 bis SS4, der Zentral-Server-Knoten AS und die Inhalts-Server-Knoten CONTS1 und CONTS2 sind über das Kommunikationsnetz KN1 miteinander verbunden.

Bei dem Kommunikationsnetz KN1 handelt es sich um ein breitbandiges Datennetz, beispielsweise um ein ATM, FDDI oder DQDB Netz (FDDI =Fiber Distributed Data Interface, DQDB =Distributed Queue Dual Bus).

Die Daten-Server-Knoten SS1 bis SS4, der Zentral-Server-Knoten AS und die Inhalts-Server-Knoten CONTS1 und CONTS2 werden jeweils von speziell ausgestalteten Computer Stationen gebildet. Die in Fig. 1 gezeigte Anzahl von Daten-Server-Knoten und Inhalts-Server-Knoten ist beispielhaft gewählt.

Über die Daten-Server-Knoten SS1 bis SS4 verteilt sind Datensätze mit verschiedenem Inhalt gespeichert. In jedem der Daten-Server-Knoten SS1 bis SS4 sind hierbei ein oder mehrere dieser Datensätze gespeichert, wobei Datensätze mit dem gleichen Inhalt durchaus parallel in verschiedenen Daten-Server-Knoten abgespeichert sein können. Auf Anforderung geben die Daten-Server-Knoten SS1 bis SS4 einen in ihnen gespeicherten Datensatz wieder und übermitteln die wiedergegebenen Daten als Datenstrom an einen Client-Knoten.

Ein Datensatz bestehen hierbei jeweils aus den Video-Daten, die einen bestimmten Inhalt beschreiben, beispielsweise um die Video-Daten eines speziellen Video-Filmes. Es ist jedoch auch möglich, daß ein Datensatz Multi-Media Daten, Audio-Daten oder sonstigen Daten umfaßt, die vom Client-Knoten im wesentlichen synchron über ein entsprechendes Ausgabemittel dem Teilnehmer übermittelt werden.

In den Inhalts-Server-Knoten CONTS1 und CONTS2 sind eine Vielzahl von Datensätzen mit verschiedenen Inhalten gespeichert, von denen jeder einzelne auf Anforderung über das Kommunikationsnetz KN1 in einen der Daten-Server-Knoten SS1 bis SS4 heruntergeladen werden kann.

Der Zentral-Server-Knoten AS steuert die Zuordnung zwischen Client-Knoten und den jeweiligen Daten-Server-Knoten. Er bestimmt, welcher der Daten-Server-Knoten SS1 bis SS4 welchen der Client-Knoten C1 bis C4 bedient. Darüberhinaus steuert er die Verteilung von Inhalten auf die Daten-Server-Knoten SS1 bis SS4.

Es ist möglich, daß die Daten-Server-Knoten SS1 bis SS4 und der Zentral-Server-Knoten AS miteinander über das Kommunikationsnetz KN2 kommunizieren.

Weiter ist es möglich, auf die Inhalts-Server-Knoten CONTS1 und CONTS2 zu verzichten. Datensätze könnten auch direkt, beispielsweise mittels eines Videorecorders in die Daten-Server-Knoten SS1 bis SS4 geladen werden.

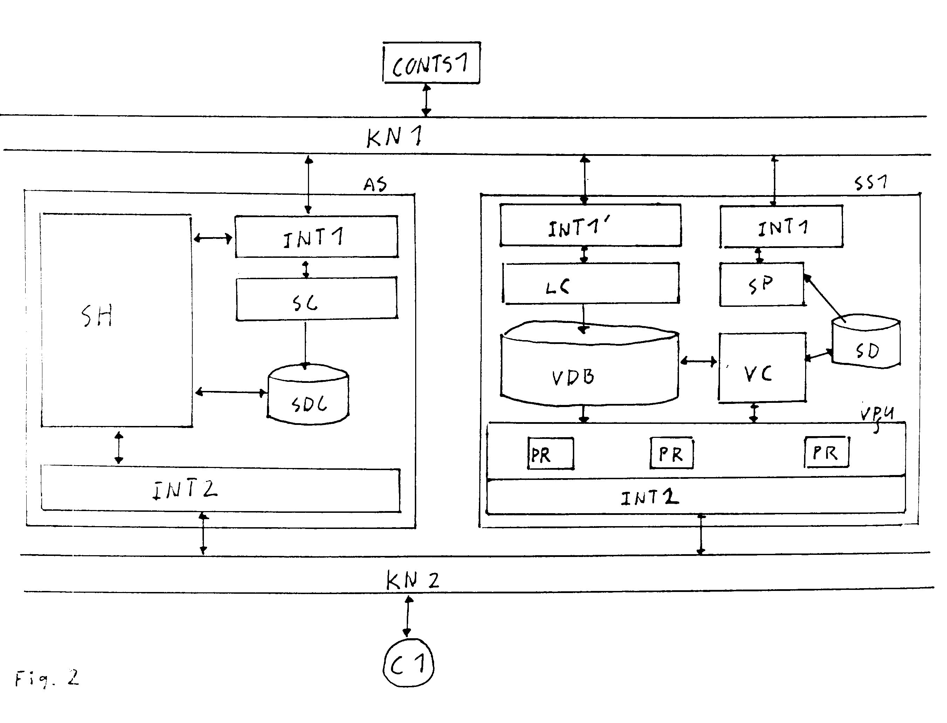

Im Folgende wird die detaillierte Funktionsweise der Daten-Server-Knoten SS1 bis SS4 und des Zentral-Server-Knotens AS anhand von Fig. 2 erläutert.

Fig. 2 zeigt die Kommunikationsnetze KN1 und KN2, den Zentral-Server-Knoten AS sowie beispielhaft den Daten-Server-Knoten SS1, den Inhalts-Server-Knoten CONTS1 und den Client-Knoten C1.

Der Daten-Server-Knoten SS1 weist drei Kommunikationseinheiten INT1, INTl' und INT2, zwei Speichereinheiten VDB und SD, drei Steuereinheiten LC, VC und SP, und eine Wiedergabeeinheit VPU auf.

Die Kommunikationseinheiten INT1, INT1' und INT2 werden von den Anschlußbaugruppen und Protokoll-Stacks gebildet, die dem Anschluß des Daten-Server-Knotens SS1 an die Kommunikationsnetze KN1 bzw. KN2 dienen.

Die Speichereinheit VDB besteht vorzugsweise aus mehreren Plattenlaufwerken und Puffer-Speichern und ist zum Speichern von großen Datenmengen geeignet. In der Speichereinheit VDB sind die in dem Daten-Server-Knoten gespeicherten Datensätze abgespeichert.

Die Wiedergabeeinheit VPU weist mehrere Wiedergabe-Ressourcen PR auf. Eine Widergabe-Ressource PR greift, wenn sie aktiviert ist, auf die Speichereinheit VDB zu, gibt einen dort gespeicherten Datensatz wieder und senden den sich so ergebenden kontinuierlichen Datenstrom über die Kommunikationseinheit INT2 und das Kommunikationsnetz KN2 an einen oder parallel an mehrere der Client-Knoten C1 bis C4. Bei der Wiedergabe des Datensatzes und dem Senden des sich hierbei ergebenden Datenstroms belegt die Wiedergabe-Ressource PR hierbei auch Ressourcen der Speichereinheit VDB und der Kommunikationseinheit INT2.

Die Speichereinheit SD ist zum Speichern einer kleineren Datenmenge ausgebildet und stellt vorzugsweise eine Datei des Computer-Systems dar, auf dem der Daten-Server-Knoten SS1 basiert. In der Speichereinheit SD sind Zustandsdaten des Daten-Server-Knotens SS1 abgespeichert. Solche Zustandsdaten sind die Inhalte der in der Speichereinheit VDB abgespeicherten Datensätze und die Auslastung des Daten-Server-Knotens SS1.

Es ist hierbei vorteilhaft, Zustandsdaten über die Auslastung der Ressourcen der Speichereinheit VDB, der Wiedergabe-Ressourcen PR und der Ressourcen der Kommunikationseinheit INT1 abzuspeichern. Der Inhalt des Datensatzes, dessen Wiedergabe eine dieser Ressource belegt und die zu erwartende Belegtzeit können ebenfalls jeweils als Zustandsdaten abgespeichert werden.

Die Steuereinheit VC ermittelt, welche der Ressourcen der Speichereinheit VDB, der Wiedergabeinheit VPU und der Kommunikationseinheit INT2 einem zugeordneten Client-Knoten zuzuordnen sind und veranlaßt die Wiedergabe des von diesem Client-Knoten angeforderten Inhalts. Die Zuordnung erfolgt hierbei unter dem Gesichtspunkt der Ressourcenoptimierung. Weiter vermerkt die Steuereinheit VC eine Veränderung der Ressourenauslastung sowie eine Veränderung der in der Speichereinheit VDB abgelegten Inhalte in der Speichereinheit SD.

Die Steuereinheit SP übermittelt auf eine Anforderungsnachricht von dem Zentral-Server-Knoten AS die in der Speichereinheit SD gespeicherten Zustandsdaten an den Zentral-Server-Knoten AS. Die Anforderungsnachricht und die Zustandsdaten werden hierbei über die Kommunikationseinheit INT1 und das Kommunikationsnetz KN1 ausgetauscht.

Es ist auch möglich, daß die Steuereinheit SP abhängig von den Parametern der Anforderungsnachricht nur einen Teil der Zustandsdaten übermittelt.

Weiter ist es möglich, daß die Steuereinheit SP die Zustandsdaten regelmäßig oder bei einer Veränderung der Zustandsdaten an den Zentral-Server-Knoten AS übermittelt. Im letzen Fall können auch nur die veränderten Zustandsdaten übermittelt werden.

Die Steuereinheit LC steuert das Herabladen von in einem der Inhalt-Server-Knoten CONTS1 und CONTS2 gespeicherten Datensätzen in die Speichereinheit VDB. Auf den Empfang einer Steuernachricht von dem Zentral-Server-Knoten AS sendet sie eine Anforderungsnachricht an einen der Inhalt-Server-Knoten, die diesen auffordert, in den Daten-Server-Knoten SS1 einen Datensatz mit einem bestimmten Inhalt zu laden. Dieser Inhalt wird von der empfangenen Steuernachricht vorgegeben. Der daraufhin über das Kommunikationsnetz KN1 und die Kommunikationseinheit INT1' empfange Datensatz wird sodann von der Steuereinheit LC in der Speichereinheit VDB abgespeichert. Da dieser Ladevorgang über das breitbandige Datennetz KN1 erfolgt, nimmt dieser Ladevorgang im Vergleich zur Wiedergabezeit des Datensatzes durch die Wiedergabeeinheit VPU nur kurze Zeit in Anspruch.

Der Zentral-Server-Knoten AS weist eine Speichereinheit SDC, zwei Steuereinheiten SH und SC und zwei Kommunikationseinheiten INT1 und INT2 auf.

Die Speichereinheit SDC wird von einer Datenbank oder einer Datei des Computer-Systems gebildet, auf dem der Zentral-Server-Knoten AS basiert. In der Speichereinheit SDC sind die oben beschriebenen Zustandsdaten des Daten-Server-Knotens SS1 sowie die entsprechenden Zustandsdaten der übrigen Daten-Server-Knoten SS2 bis SS4 abgespeichert.

Die in der Speichereinheit SDC abgespeicherten Zustandsdaten werden laufenden von der Steuereinheit SC aktualisiert. Die Steuereinheit SC überwacht hierzu laufend die Daten-Server-Knoten SS1 bis SS4, indem sie regelmäßig Anforderungsnachrichten zum Senden von Zustandsdaten an diese sendet. Es ist auch möglich daß sie die Daten-Server-Knoten SS1 bis SS4 laufende überwacht, indem diese selbst regelmäßig oder bei Auftreten spezieller Ereignisse (Änderung der Zustandsdaten) Zustandsdaten an sie senden.

Die Steuereinheit SH steuert die dynamische Zuordnung von Daten-Server-Knoten zu anfordernden Client-Knoten und verwaltet die Verteilung von Inhalten auf die Daten-Server-Knoten SS1 bis SS4. Die Zuordnung ist hierbei insoweit dynamisch, als daß sie von dem augenblicklichen Zustand des Datenbereitstellungsystems DPS abhängig ist. Die Durchführung der Verwaltung der Inhaltsverteilung durch die Steuereinheit SH ist vorteilhaft, aber nicht zwingend für die Funktionsweise des Datenbereitstellungsystems DPS.

Empfängt die Steuereinheit SH eine Anforderungsnachricht von einem der Client-Knoten C1 bis C4, die einen Datenstrom mit einem bestimmten Inhalt anfordert, so führt sie folgende Schritte durch:

Mittels der in der Speichereinheit SDC abgespeicherten Zustandsdaten ermittelt sie, in welchem der Daten-Server-Knoten SS1 bis SS4 ein Datensatz mit dem bestimmten Inhalt abgespeichert ist. Aus dieser ersten Gruppe von Daten-Server-Knoten ermittelt sie sodann diejenigen Daten-Server-Knoten, die über ausreichend freie Ressourcen für die Wiedergabe und Übermittlung des Datensatzes verfügen. Aus dieser zweiten Gruppe von Daten-Server-Knoten wählt sie sodann denjenigen aus, bei dem die wenigsten Ressourcen bei der Wiedergabe und Übermittlung des Datensatzes belegt werden. Dies ist beispielsweise der Fall, wenn in diesem Daten-Server-Knoten kurz vorher mit der Wiedergabe und Übermittlung des Datensatzes an einen anderen Client-Knoten begonnen worden ist oder eine entsprechende Zuordnung kurz vorher erfolgt ist.

Eine weiteres zusätzliches oder alternatives Auswahlkriterium besteht darin, aus der zweiten Gruppe von Daten-Server-Knoten denjenigen auszuwählen, der über die meisten freien Ressourcen verfügt. Dadurch wird ein gleichmäßige Ressourcenauslastung der Daten-Server-Knoten erreicht.

Auch die zu erwartende Belegungszeit der augenblicklich belegten Ressourcen kann hierbei als Kriterium eingehen.

Weiter ist es vorteilhaft, als zusätzliches oder alternatives Auswahlkriterium Kommunikationsparameter der Kommunikationsverbindungen zwischen den Daten-Server-Knoten der zweiten Gruppe und dem anfordernden Client-Knoten zu berücksichtigen. Solche Kommunikationsparameter sind beispielsweise deren Länge, die hierfür von Netzbetreibern berechneten Kosten, die hierfür zur Verfügung stehende Bandbreite, die hierfür garantierte Übertragungsqualität oder die sich durch ihre Belegung ergebende Veränderung der Netzauslastung.

Die Steuereinheit SH verwaltet weiter mittels der in der Speichereinheit SDC gespeicherten Zustandsdaten die Verteilung der Inhalte über die Daten-Server-Knoten SS1 bis SS2. Finden sich keine Daten-Server-Knoten, die den Kriterien der oben definierten ersten oder zweiten Gruppe entsprechen, so wählt die Steuereinheit SH ein oder mehrere Daten-Server-Knoten aus und veranlaßt durch Senden einer entsprechenden Steuernachricht an den oder die ausgewählten Daten-Server-Knoten das Laden eines Datensatzes mit dem bestimmten Inhalt in den oder die Daten-Server-Knoten.

Für die Auswahl greift die Steuereinheit SH auf die in der Speichereinheit SDC gespeicherten Zustandsdaten zu. Sie wählt eine dritte Gruppe von Daten-Server-Knoten aus, diejenigen Daten-Server-Knoten, die über ausreichend frei Ressourcen der Speichereinheit VDB für die Abspeicherung eines Datensatzes mit dem bestimmten Inhalt verfügen. Aus dieser Gruppe wählt sie denjenigen Daten-Server-Knoten aus, der insgesamt über die meisten freien Ressourcen verfügt.

Es ist auch möglich, daß anstelle dieses Kriteriums oder zusätzlich zu diesem Kriterium noch folgende weiteren Kriterien für diese Auswahl beachtet werden: Es werden Kommunikationsparameter der Kommunikationsverbindungen zwischen diesen Daten-Server-Knoten und dem anfordernden Client-Knoten beachtet. Es wird die statische Verteilung der anfordernden Client-Knoten mit dem Ziel einer globalen Ressourcenoptimierung beachtet.

Erfüllt keiner der Daten-Server-Knoten SS1 bis SS4 das Kriterium der dritten Gruppe, so veranlaßt die Steuereinheit SH, daß der ausgewählte Daten-Server-Knoten beim Laden des Datensatzes mit dem bestimmten Inhalt einen in der Speichereinheit VDB abgespeicherten Datensatz überschreibt. Hierbei wird von der Steuereinheit SH zuerst ein Datensatz ausgewählt, der überschrieben werden soll, weil dessen Inhalt beispielsweise im Vergleich zur Anzahl seiner in den Daten-Server-Knoten SS1 bis SS4 gespeicherten Kopien nur wenig von Client-Knoten angefordert wird. Anschließend werden diejenigen Daten-Server-Knoten ausgewählt, in denen dieser ausgewählte Datensatz abgespeichert ist. Aus dieser vierten Gruppe wird analog zum obigen Auswahlprozeß derjenige Daten-Server-Knoten ausgewählt, in den ein Datensatz mit dem bestimmten Inhalt zu laden ist.

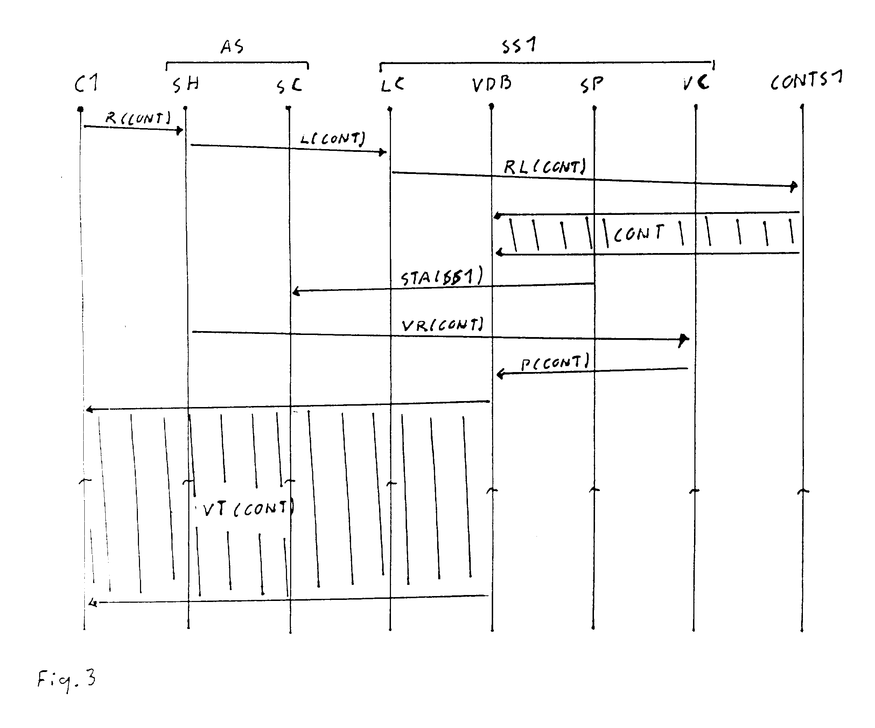

Anhand von Fig. 3 wird nun beispielhaft der Ablauf des bei der Anforderung eines Datensatzes mit einem bestimmten Inhalt durchgeführten Verfahrens erläutert.

Fig. 3 zeigt den Client-Knoten Cl, den Zentral-Server-Knoten AS mit den Steuereinheiten SH und SC, den Daten-Server-Knoten SS1 den Inhalts-Server-Knoten CONTS1 und mehrere Nachrichten R(CONT), L(CONT), RL(CONT), CONT, STA(SS1), VR(CONT) und P(CONT) sowie den Datenstrom VT(CONT), die gegen die Zeit aufgetragen sind.

Der Client-Knoten C1 sendet eine Nachricht R(CONT), die durch das Kommunikationsnetz KN2 zu dem Zentral-Server-Knoten AS geleitet wird. Mittels der Nachricht R(CONT) fordert der Client-Knoten C1 hierbei auf, ihn mit einem Datenstrom eines bestimmten Inhaltes zu beliefern.

In dem Zentral-Server-Knoten AS bearbeitet die Steuereinheit SH die Nachricht R(CONT) und wählt gemäß des oben beschriebenen Verfahrens beispielhaft den Daten-Server-Knoten SS1 aus. Da der bestimmte Inhalt noch nicht im Daten-Server-Knoten SS1 abgespeichert ist, sendet die Steuereinheit SH eine Nachricht L(CONT) an den Daten-Server-Knoten SS1, mittels der sie diesen auffordert, einen Datensatz mit dem bestimmten Inhalt zu laden. Die Steuereinheit LC bearbeitet die Nachricht L(CONT) und sendet eine Nachricht RL(CONT) an den Inhalts-Server-Knoten CONTS1, der daraufhin den Datensatz mit dem bestimmten Inhalt in der Nachricht CONT über das Kommunikationsnetz KN2 an den Daten-Server-Knoten SS1 sendet, wo der Datensatz in der Speichereinheit VDB abgespeichert wird. Dadurch ändern sich die in der Speichereinheit SP abgespeicherten Zustandsdaten. Die neuen Zustandsdaten werden im folgenden von der Steuereinheit SP mit der Nachricht STA(SS1) an den Zentral-Server-Knoten AS gesendet, wo sie von der Steuereinheit SC in die Speichereinheit SDC eingetragen werden.

Die Steuereinheit SH erkennt anhand der Änderungen der Zustandsdaten in der Speichereinheit SDC, daß der Daten-Server-Knoten SS1 nun über einen Datensatz mit dem bestimmten Inhalt verfügt und ordnet nun den Daten-Server-Knoten SS1 dem anfordernden Client-Knoten C1 zu. Es ist auch möglich, daß die Steuereinheit SH nicht die Rückmeldung über das erfolgte Laden dieses Datensatzes abwartet und sofort nach der Auswahl diese Zuordnung vornimmt.

Die Steuereinheit SH sendet bei Zuordnung die Nachricht VR(CONT) an den Daten-Server-Knoten SS1, der der zugeordnete Daten-Server-Knoten ist. Mit dieser Nachricht fordert sie ihn auf, Daten mit dem bestimmten Inhalt an den Client-Knoten C1 zu übertragen. Es ist auch möglich, daß die Steuereinheit SH dem Client-Knoten C1 den zugeordneten Daten-Server-Knoten mitteilt und der Client-Knoten sodann die Nachricht VR(CONT) an diesen zugeordneten Daten-Server-Knoten sendet.

Auf den Empfang der Nachricht VR(CONT) weist die Steuereinheit VC sodann die zu deren Ausführung notwendigen Ressourcen zu und sendet die Nachricht P(CONT) an die Wiedergabeeinrichtung VPU worauf diese den in der Speichereinheit VDB gespeicherten Datensatz mit dem bestimmten Inhalt wiedergibt und als kontinuierlichen Datenstrom VT(CONT) an den Client-Knoten C1 sendet.

## Patentansprüche

1. Verfahren zur Belieferung von Client-Knoten (C1 bis C4) mit Datenströmen verschiedenen Inhalts,
**dadurch gekennzeichnet**, daß Datensätze mit den verschiedenen Inhalten in zwei oder mehr Daten-Server-Knoten (SS1 bis SS4) gespeichert werden, die über ein erstes Kommunikationsnetz (KN2) mit den Client-Knoten (C1 bis C4) verbindbar sind, daß ein Zentral-Server-Knoten (AS) die Daten-Server-Knoten (SS1 bis SS4) laufend überwacht und hierbei Zustandsdaten über die Auslastung der Daten-Server-Knoten (SS1 bis SS4) und den Inhalt von in den Daten-Server-Knoten (SS1 bis SS4) gespeicherten Datensätzen empfängt, daß zur Anforderung eines Datenstroms mit einem bestimmten Inhalt ein Client-Knoten (C1) eine Anforderungsnachricht (R(CONT)) an den Zentral-Server-Knoten (AS) sendet, daß der Zentral-Server-Knoten (AS) dem anfordernden Client-Knoten (C1) mittels Auswertung der Zustandsdaten dynamisch einen der Daten-Server-Knoten (SS1) zuordnet, in dem ein Datensatz mit dem bestimmten Inhalt gespeichert ist, und daß der zugeordnete Daten-Server-Knoten (SS1) den angeforderten Datenstrom an den anfordernden Client-Knoten (C1) sendet.

2. Verfahren nach Anspruch 1, dadurch gekennzeichnet, daß als Datensatz jeweils Video-Daten gespeichert werden, die dessen Inhalt, beispielsweise einen Video-Film, beschreiben.

3. Verfahren nach Anspruch 1, dadurch gekennzeichnet, daß der Zentral-Server-Knoten (AS) bei der Zuordnung Kommunikationsparameter der Kommunikationsverbindungen zwischen den Daten-Server-Knoten (SS1 bis SS4) und dem anfordernden Client-Knoten (C1) berücksichtigt.

4. Verfahren nach Anspruch 1, dadurch gekennzeichnet, daß der Zentral-Server-Knoten denjenigen Daten-Server-Knoten zuordnet, bei dessen Zuordnung am wenigsten Ressourcen belegt werden.

5. Verfahren nach Anspruch 1, dadurch gekennzeichnet, daß der Zentral-Server-Knoten (AS) mittels der gesammelten Zustandsdaten ermittelt, welcher Inhalt in welchem Daten-Server-Knoten (SS1 bis SS4) abzuspeichern ist.

6. Verfahren nach Anspruch 1 oder Anspruch 6, dadurch gekennzeichnet, daß der Zentral-Server-Knoten (AS) das Herabladen von Datensätzen von einem oder mehreren Inhalts-Server-Knoten (CONTS1 bis CONTS2) in die Daten-Server-Knoten (SS1 bis SS4) steuert.

7. Verfahren nach Anspruch 1 oder Anspruch 6, dadurch gekennzeichnet, daß Datensätze über ein zweites Kommunikationsnetz (KN1) in die Daten-Server-Knoten (SS1 bis SS4) herabgeladen werden.

8. Verfahren nach Anspruch 7, dadurch gekennzeichnet, das das erste Kommunikationsnetz (KN2) von einem Zugangsnetz und das zweite Kommunikationsnetz (KN1) von einem breitbandigen Kommunikationsnetz gebildet wird.

9. Verfahren zur Unterstützung der Belieferung von Client-Knoten (C1 bis C4) mit Datenströmen verschiedenen Inhalts,
**dadurch gekennzeichnet**, daß ein Zentral-Server-Knoten (AS) zwei oder mehr Daten-Server-Knoten (SS1 bis SS4), in denen Datensätze mii den verschiedenen inhalten gespeichert sind und die über ein erstes Kommunikationsnetz (KN2) mit den Client-Knoten (C1) verbindbar sind, laufend überwacht und hierbei Zustandsdaten über die Auslastung der Daten-Server-Knoten (SS1 bis SS4) und den Inhalt von in den Daten-Server-Knoten (SS1 bis SS4) gespeicherten Datensätzen empfängt, daß der Zentral-Server-Knoten (AS) auf den Empfang einer Anforderungsnachricht (R(CONT)) von einem Client-Knoten (C1), der einen Datenstrom mit einem bestimmten Inhalt anfordert, dem anfordernden Client (C1) mittels Auswertung der Zustandsdaten dynamisch einen der Daten-Server-Knoten (SS1) zuordnet, in dem ein Datensatz mit dem bestimmten Inhalt gespeichert ist und der den angeforderten Datenstrom an den anfordernden Client-Knoten (C1) zu senden hat.

10. Datenbereitstellungsystem (DPS) zur Belieferung von Client-Knoten (C1 bis C4) mit Datenströmen verschiedenen Inhalts,
**dadurch gekennzeichnet**, daß das Datenbereitstellungsystem (DPS) mit zwei oder mehr Daten-Server-Knoten (SS1 bis SS4) versehen ist, die über ein erstes Kommunikationsnetz (KN2) mit den Client-Knoten (C1 bis C4) verbindbar sind und die jeweils mit einer Speichereinheit (VDB) zum Speichern von Datensätzen verschiedenen Inhalts und mit einer Wiedergabeeinheit (VPU) zur Wiedergabe von gespeicherten Datensätze und zum Senden eines sich hierbei ergebenden Datenstroms an Client-Knoten (C1 bis C4) versehen sind, und daß das Datenbereitstellungsystem (DPS) mit einem Zentral-Server-Knoten (AS) versehen ist, der mit einer Überwachungseinheit (SC) und einer Zuordnungseinheit (SH) versehen ist, wobei die Überwachungseinheit (SC) so ausgestaltet ist, daß sie die Daten-Server-Knoten (SS1 bis SS4) laufend überwacht und hierbei Zustandsdaten über die Auslastung der Daten-Server-Knoten (SS1 bis SS4) und den Inhalt von in den Daten-Server-Knoten (SS1 bis SS4) gespeicherten Datensätzen empfängt, und die Zuordnungseinheit (SH) so ausgestaltet ist, daß sie auf den Empfang einer Anforderungsnachricht (R(CONT)) zur Anforderung eines Datenstroms mit einem bestimmten Inhalt dem anfordernden Client-Knoten (C1) mittels Auswertung der Zustandsdaten dynamisch einen der Daten-Server-Knoten (SS1) zuordnet, in dem ein Datensatz mit dem bestimmten Inhalt gespeichert ist.

11. Zentral-Server-Knoten (AS) zur Unterstützung der Belieferung von Client-Knoten (C1 bis C4) mit Datenströmen verschiedenen Inhalts,
**dadurch gekennzeichnet,** daß der Zentral-Server-Knoten (AS) mit einer Überwachungseinheit (SC) versehen ist, die so ausgestaltet ist, daß sie zwei oder mehr Daten-Server-Knoten (SS1 bis SS4), die über ein erstes Kommunikationsnetz (KN2) mit den Client-Knoten (C1 bis C4) verbindbar sind, laufend überwacht und hierbei Zustandsdaten über die Auslastung der Daten-Server-Knoten (SS1 bis SS4) und den Inhalt von in den Daten-Server-Knoten (SS1 bis SS4) gespeicherten Datensätzen empfängt, und daß der Zentral-Server-Knoten (AS) mit einer Zuordnungseinheit (SH) versehen ist, die so ausgestaltet ist, daß sie auf den Empfang einer Anforderungsnachricht (R(CONT)) zur Anforderung eines Datenstroms mit einem bestimmten Inhalt dem anfordernden Client-Knoten (C1) mittels Auswertung der Zustandsdaten dynamisch einen der Daten-Server-Knoten (SS1) zuordnet, in dem ein Datensatz mit dem bestimmten Inhalt gespeichert ist.
